# EUROPEAN PATENT SPECIFICATION

(11) **EP 3 788 334 B1**
(45) Date of publication and mention of the grant of the patent: **19.10.2022**
(21) Application number: 18916579.8
(22) Date of filing: 28.04.2018
(51) Int. Cl.: G01K 11/12

(54) **TERMINAL BLOCK**
ANSCHLUSSLEISTE
BORNIER

(43) Date of publication of application: 10.03.2021
(73) Proprietor: TE Connectivity Solutions GmbH, 8200 Schaffhausen (CH)
(72) Inventor: SU, Cuicui, Beijing 100102 (CN); LI, Nan, Beijing 102218 (CN); CHEN, Jiansheng, Beijing 100024 (CN); VILLARD, Romain, 60800 Saint-Priest (FR); BARTHES, Karine, 69500 Bron (FR); DUMOUX, Jacques, 69740 Genas (FR); HAMOND, Christophe, 69510 Messmy (FR)
(74) Representative: Germain Maureau
(86) International application number: PCT/CN2018/085010
(87) International publication number: WO 2019/205116

(56) References cited:
- CN-U- 203 258 171
- CN-U- 207 197 695
- DE-A1- 19 614 112
- DE-A1- 19 614 112
- KR-A- 20170 120 842
- KR-A- 20170 120 842
- KR-B1- 101 698 569
- KR-B1- 101 698 569
- KR-B1- 101 698 569

## Description

### Technical Field

The invention relates to terminal blocks, and more particularly to the terminal blocks being able to indicate an overheat condition to an observer.

### Background Art

In a terminal block, electrical contacts are typically made between its conductive linking bar and at least two electrical conductors by screw fastening means. If the electrical contacts between these contact parts are unsatisfactory, for example, if insufficient contact pressure is provided between the parts, arcing may occur, which leads to overheating of the terminal block, which, if undetected, may prove dangerous, possibly leading to the terminal block catching fire.

Patent KR 1 698 569 B1 discloses a terminal block in which a thermal conductive path is established for conducting heat originated in a conductive linking bar, through a metallic contact terminal of colour change unit, to an insulating cap formed on upper end of the contact terminal and then to a discoloration unit arranged on the insulating cap, and thus the discoloration unit will change colour indicating overheat condition to an observer. However, there are technical problems with the terminal block. Since the material of the insulating cap normally exhibits higher thermal resistivity than that of the metallic contact terminal, it will provide a thermal insulation between the metallic contact terminal and the discoloration unit. This may mean that in certain operating conditions the internal electrical contacts may seriously overheat before the external discoloration unit reaches a sufficiently high temperature to change colour. Besides, the discoloration unit may be exposed to an unfriendly environment having high probability of mechanical damages, which causes deterioration of the discoloration unit.

Another examples of a terminal block can be found in KR 2017 0120842 A.

### Brief Summary of the Invention

It is therefore an objective of the invention to provide a terminal block including: an insulating body with a duct and at least one hole formed through a wall of the insulating body, a conductive linking bar in the insulating body for connecting at least one wire respectively passing through the at least one hole, a temperature probe received by the duct and made of transparent and insulating material having a first end and a second end, and a discoloration layer arranged at the first end of the temperature probe having at least a thermochroic layer. At least a portion of the temperature probe is arranged to pass through the duct towards the conductive linking bar so that the discoloration layer at the first end of the temperature probe is closer to the conductive linking bar than the second end of the temperature probe.

By having such configuration, the discoloration layer will be heated rapidly thereby in the event of the bar overheating to provide a rapid colour change indicating a fault condition. This makes it more sensitive to the temperature of the conductive linking bar. Besides, the lights reflecting the colour change of the discoloration layer will propagate to the external of the insulating body through the optical path provided by the transparent temperature probe and arrives at the second end portion of the probe, which makes it visible to the eyes of the observer from an external point of view. This allows the image of discoloration layer to be viewed by the observer perceiving a fault occurring.

Preferably, the terminal block further includes a screw connection terminal arranged in the insulating body, being configured to fasten one of the wires passing through one of the holes to the conductive linking bar. The screw connection terminal includes a screw with rotational axis in a longitudinal direction of the duct. The duct includes a first portion, a second portion, and an inward protrusion between its first portion and the second portion, wherein the first portion is closer to the conductive linking bar than the second portion. A head of the screw is arranged to pass through the first portion of the duct and is obstructed by the inward protrusion of the duct to further pass into the second portion of the duct. The temperature probe includes a recess portion between its first end and second end, being configured to mate with the inward protrusion of the duct preventing relative movement of the duct and the temperature probe. The recess portion has a form that complements the inward protrusion of the duct, so that the latter can be retained in the former where the temperature probe is inserted in the duct. Thus, the discoloration layer at one end of the temperature probe is put in thermal contact via the screw connection terminal within the terminal block. The screw connection terminal is made of metal exhibiting a relatively low thermal resistance. Thus, the discoloration layer will be heated rapidly thereby in the event of the bar overheating to provide a rapid colour change indicating a fault condition. This makes it more sensitive to the temperature of the conductive linking bar.

Preferably, in a state of fastening the wire to the conductive linking bar, the discoloration layer at the first end of the temperature probe is in contact with the head of the screw of the screw connection terminal with the mating of the inward protrusion of the duct and the recess portion of the temperature probe. In such state, the head of the screw and the first end of the temperature probe are disposed in space defined by the first portion of the duct, and the second end is placed in the space defined by the second portion of the duct. These arrangements provide a way of use of the inward protrusion of the duct both for preventing the screw from being detached from the terminal block and obtaining an improved retaining effect for the temperature probe.

Preferably, the discoloration layer at the first end of the temperature probe is arranged in contact with the conductive linking bar. By having such configuration, the discoloration layer at one end of the temperature probe is put in direct contact with the conductive linking bar within the terminal block, and will be heated rapidly thereby in the event of the bar overheating to provide a rapid colour change indicating a fault condition. This makes it more sensitive to the temperature of the conductive linking bar.

Preferably, the conductive linking bar includes an opening facing the duct, and the temperature probe further includes a protrusion extending from its first end being arranged inserted into the opening of the conductive linking bar pressing against internal side of the opening. This makes it possible for securing the appropriate position between the bar and the probe and the discoloration layer can be covered by the temperature probe protecting external mechanical damages.

Preferably, the temperature probe further includes a head arranged at its second end being shaped in a lens magnifying an image of the thermochromic layer at its first end. The color change of the discoloration layer will be visible with magnifying effect by an observer through the transparent head so as to raise his alert the fact that the terminal block is internally overheating.

Preferably, the head of the temperature probe is arranged outside of the duct of the insulating body.

Preferably, material of the thermochromic layer is selected from thermochromic paint, ink, tape, film, label or a combination

Preferably, the transparent and insulating material of the temperature probe is selected from transparent thermoplastics (polycarbonate, polyamide, polymethylmethacrylate, ABS, rubbers, glasses and ceramics.

Preferably, the discoloration layer further includes a background layer on the thermochromic layer

### Brief Description of the Drawings

The subject matter of the invention will be explained in more detail in the following text with reference to preferred exemplary embodiments which are illustrated in the drawings, in which:
Figures 1A and 1B respectively illustrate a perspective view and a sectional view along plane A-A of a terminal block according to a first embodiment of present invention;
Figures 2A and Figure 2B respectively illustrate the temperature probe and its assembly with the duct of the insulating body according to the first embodiment;
Figures 3A and 3B illustrate a perspective view and a sectional view along plane B-B of a terminal block according to a second embodiment of present invention; and
Figures 4A respectively illustrate an explosion view and a sectional view of the second embodiment of the temperature probe; and Figure 4B illustrates its assembly with the duct of the insulating body.

The reference symbols used in the drawings, and their meanings, are listed in summary form in the list of reference symbols. In principle, identical parts are provided with the same reference symbols in the figures.

### Preferred Embodiments of the Invention

Note, the headings are for organizational purposes only and are not meant to be used to limit or interpret the description or claims. Furthermore, note that the word "may" is used throughout this application in a permissive sense (i.e., having the potential to, being able to), not a mandatory sense (i.e., must)." The term "include", and derivations thereof, mean "including, but not limited to". The term "connected" means "directly or indirectly connected", and the term "coupled" means "directly or indirectly connected".

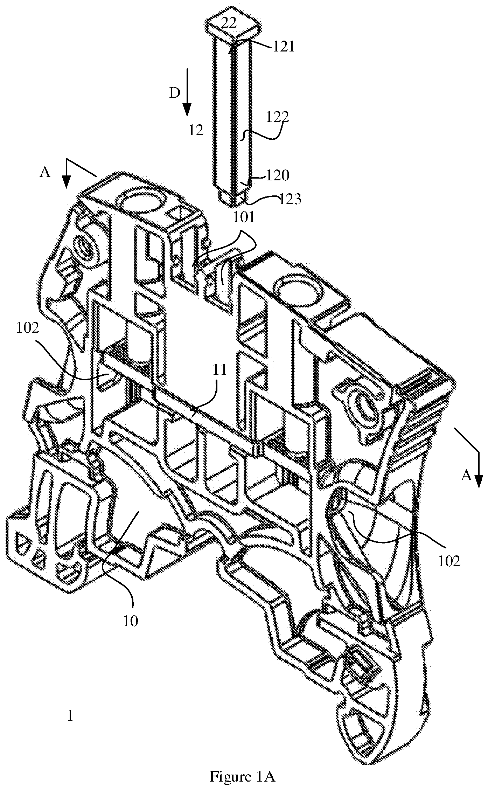

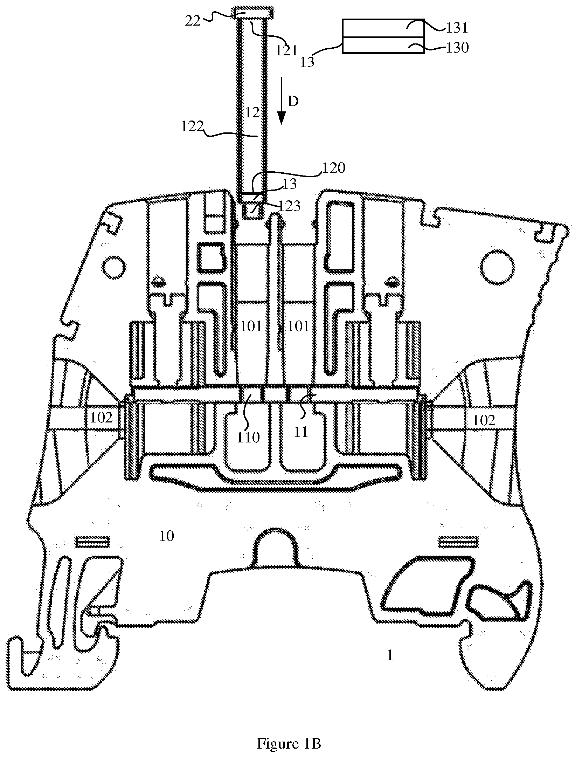

Figures 1A and 1B respectively illustrate a perspective view and a sectional view along plane A-A of a terminal block according to a first embodiment of present invention;

As shown in figures 1A and 1B, the terminal block 1 includes an insulating body 10, a conductive linking bar 11, a temperature probe 12, and a discoloration layer 13 arranged on the temperature probe 12. The discoloration layer 13 includes at least a thermochroic layer. In the embodiment, the insulating body 10 is made of an insulating material and designed to be shaped like a case defining internal space by its wall. For example, the insulating body 10 is made of Polyamide (PA) material, which has a maximum withstand temperature close to 110 °C. When the temperature rises to 110 °C, especially to 130 °C, burning of terminal block will happen and thus complete product failure. So, the temperature range 110-130 °C is defined as one threshold temperature (color change transition temperature) range. For other types of terminal blocks, the threshold temperature can be determined using the same method. The wall of the insulating body 10 is suitable for separating the terminal block 1 from another identical or compatible electrical device when the two insulating bodies are mounted side-by-side. The insulating body 10 has at least one duct 101 formed though the wall of the insulating body 10. In this embodiment, there are two ducts 101, and the language hereafter exemplifies the embodiment by using one of the ducts to the left. The duct 101 is arranged to open out to the outsides of the insulating body 10 with cross-section in rectangular. The duct 101 can receive an accessory, for example a jumper for mechanical and electrical interconnection with an adjoining other terminal block. The same duct 101 can be reused for receive the temperature probe 12 for temperature monitoring of the terminal block 1, which will be described in detail thereafter.

In the embodiment, the insulating body 10 further includes two holes 102 formed through the wall of the insulating body 10, which can be used for respectively passing the wires to be connected to the conductive linking bar 11. The skilled person shall understand that the number of the holes 102 can be one or more, which depends on the observer's requirement of how many wires to be connected. For example, the duct 101 is arranged to be substantially perpendicular to the longitudinal direction of the hole 102.

In the embodiment, the shape of the conductive linking bar 11 is symmetrical about a transverse mid-plane which corresponds to that of the insulating body10, when the terminal block 1 has the conductive linking bar 11 positioned in the insulating body 10. The conductive linking bar 11 is shaped like a plane being symmetrical about the above-defined transverse mid-plane and being designed to be placed parallel to the wall with the duct 101 formed through. Inside of the insulating body 10, it provides support elements for fixing the conductive linking bar 11 so that its two ends respectively abut the internal rims of the two holes 102 and at least a portion of it abuts the internal rim of the duct 101. Thus, the wires can reach the ends of the conductive linking bar 11 passing through the two holes 102, which in turn, can be fastened to the latter by fastening means; besides, an appropriately-shaped temperature probe is allowed to pass through the duct 101 to be in direct contact with the conductive linking bar 11.

In the embodiment, the temperature probe 12 is configured to be at least partially received by the duct 101 of the insulating body 10 and be made of transparent and insulating material. The temperature probe 12 has a first end 120 and a second end 121 and a connecting portion 122 mechanically linking the first end 120 and the second end 121. For example, the longitudinal length from the first end 120 to the second end 121 of the temperature probe 12 is equal to or greater than the depth of the duct 101, and the transparent and insulating material can be selected from transparent thermoplastics (polycarbonate, polyamide, polymethylmethacrylate, ABS), rubbers, glasses and ceramics. In a state of assembly, the first end 120 and at least a part of the temperature probe 12 are arranged to pass through the duct towards the conductive linking bar 11 in a direction D so that the discoloration layer 13 on the first end 120 of the temperature probe 12 is closer to the conductive linking bar 11 than the second end 121 of the temperature probe 12. Preferably, the discoloration layer 13 at the first end 121 of the temperature probe 12 is arranged in direct contact with the conductive linking bar 11.

Thus, the discoloration layer at one end of the temperature probe is put in direct contact with the conductive linking bar within the terminal block, and will be heated rapidly thereby in the event of the bar overheating to provide a rapid colour change indicating a fault condition. This makes it more sensitive to the temperature of the conductive linking bar. Besides, the reflected lights from the discoloration layer will propagate to the external of the insulating body through the optical path provided by the transparent temperature probe and arrives at the second end portion of the probe, which makes it visible to the eyes of the observer from an external point of view. This allows the image of discoloration layer to be viewed by the observer perceiving a fault occurring.

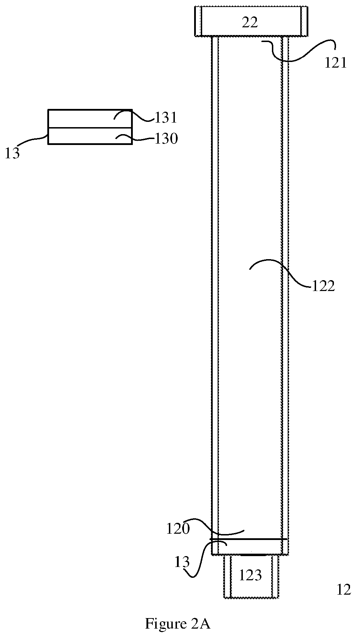

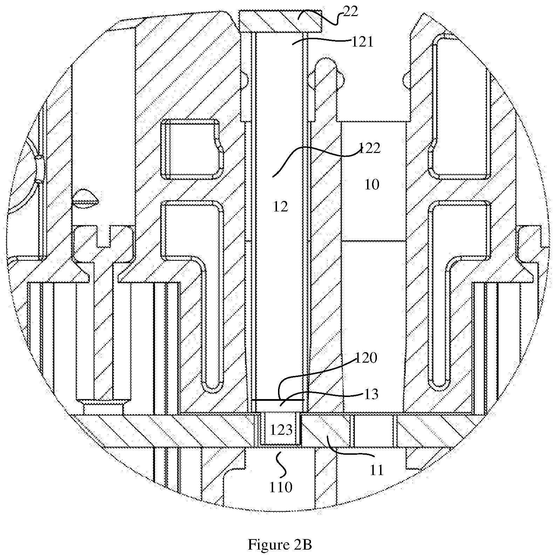

Figures 2A and Figure 2B respectively illustrate the temperature probe and its assembly with the duct of the insulating body according to the first embodiment. As shown figures 2A and 2B, the temperature probe 12 is shaped like a block having the first end 120 and the second end 121. The shape of the temperature probe 12 may be adapted to fit for the internal space of the duct 101. Preferably, the temperature probe 12 has a protrusion 123 extending from the first end 120 in the longitudinal direction of the probe. The conductive linking bar 11 includes an opening 110 facing the duct 101, being configured for insertion of the protrusion 123 extending from the first end 120 pressing against internal side of the opening. This makes it possible for securing the appropriate position between the bar and the probe and the discoloration layer can be covered by the temperature probe protecting external mechanical damages.

In the embodiment, the discoloration layer 13 is arranged in contact with the first end 120 of the temperature probe 12. For example, its thermochromic layer 130 can be sprayed/printed on the the first end 120 of the temperature probe 12. In order to accomplish the above objects, irreversible thermochromic materials, which change color at a defined temperature and remain unchanged when the temperature drops, are chosen to check the temperature history. In other embodiments, semi-reversible thermochromic materials, which change color at a defined temperature T1 and recover the original color when the temperature drops to T2 or when they meet water, may be also employed. As mentioned above, the designed threshold temperature for the example screw type terminal block is 110 or 130 °C. Of course, the threshold temperature could be set at other values depending on the specific applications or the customer's needs.

The thermochromic layer 130 may be selected from thermochromic paint, ink, tape, film, label or a combination thereof. Preferably, TC coating composition may be applied to the substrate by any of a variety methods, for example, flow coating, dipping and spraying. The coating thickness may be in a range of tens to hundreds micrometers and can be set optionally according to selection of the coating method. Preferably, the thermochromic elements may be of any type, for example, pigments, dyes, semi-conductors and liquid crystal systems. The thermochromic materials are largely chosen because of their responses to different temperatures (threshold). These TC materials have a relatively wide threshold range and will differ in the time required to change color in response to a change in temperature. Preferably, the discoloration layer 13 further includes a background layer 131 showing background colors or graphics can be applied on the thermochromic layer 130 of the discoloration layer 13 to provide a consistent basis for calibrating the color change. A base color or pattern is visible when the TC material changes to a clear, colorless or at least partially translucent state.

In the embodiment, In the embodiment, the temperature probe 12 further includes a head 22 arranged at its second end 121 being shaped in a lens magnifying an image of the thermochromic layer 13 appearing at its second end 121. For example, the head is made of transparent and insulating material, such as thermoplastics (polycarbonate, polyamide, polymethylmethacrylate, ABS, et al), rubbers, glasses and ceramics, for an easy observation of the underlying color change. The color change of the discoloration layer will be visible with magnifying effect by an observer through the transparent head so as to raise his alert the fact that the terminal block is internally overheating. Given that the second end 121 of the temperature probe 12 has a relatively small exposed surface outside of the insulating body 10, a magnification lens or other special light transmission design will be adopted for an easier observation of the color change by human eyes from a long distance.

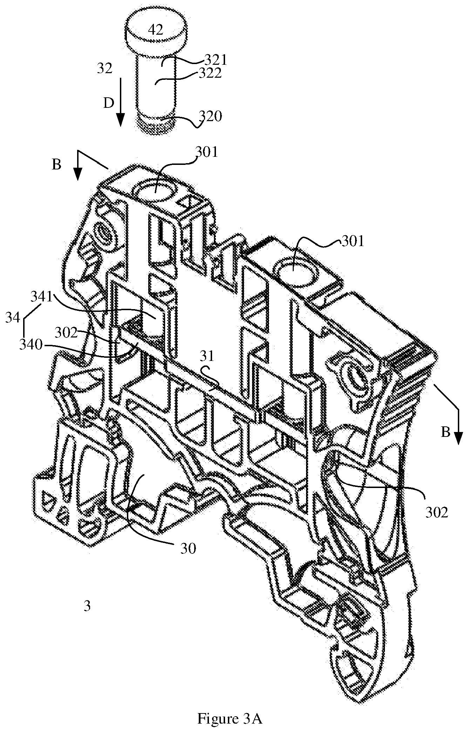

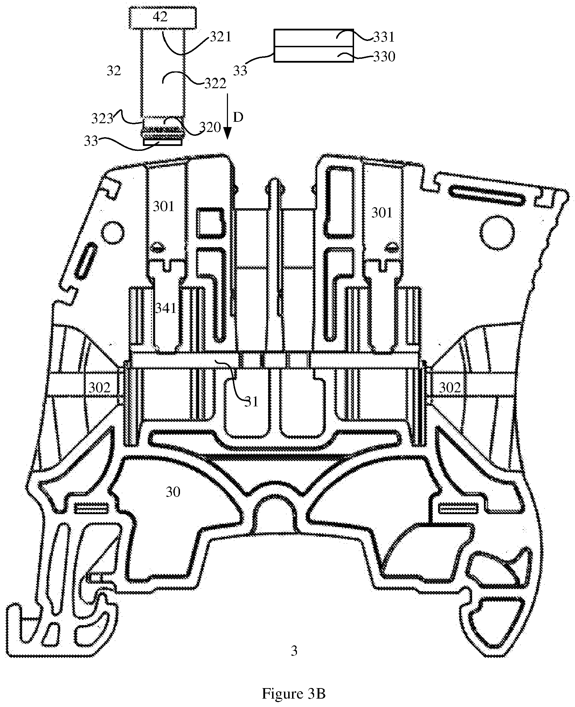

Figures 3A and 3B illustrate a perspective view and a sectional view along plane B-B of a terminal block according to a second embodiment of present invention As shown in figures 3A and 3B, the terminal block 3 includes an insulating body 30, a conductive linking bar 31, a temperature probe 32, and a discoloration layer 33 arranged on the temperature probe 32.

In the embodiment, although the insulating body 30 and the conductive linking bar 31 are of the same as that in the first embodiment, another at least one duct 301 can be used for providing a path through which an operator can insert a tool of screwdriver type to fasten a fastening screw fixing the contact between the conductive linking bar 31 and a wire abutting an end of the conductive linking bar 31 passing through the hole 302. In this embodiment, there are two ducts 301, and the language hereafter exemplifies the embodiment by using one of the ducts to the left. The connection of the wire and the conductive linking bar 31 is provided by a screw connection terminal 34, for example by a clamp 340 driven by the screw 341, when the latter is driven rotation-wise by the screwdriver. The clamp 340 fastens the end of the conductive linking bar 31 against the wire. The duct 301 can be reused for receive the temperature probe 32 for temperature monitoring of the terminal block 3, which will be described in detail thereafter. In the embodiment, the insulating body 30 further includes two holes 302 formed through the wall of the insulating body 30, which can be used for respectively passing the wires to be connected to the conductive linking bar 31, which are the same as those in the first embodiment.

Thus, the wires can reach the ends of the conductive linking bar 31 passing through the two holes 302, which in turn, can be fastened to the latter by fastening means, for example the clamp 340 and the screw 341. Besides, an appropriately-shaped temperature probe 32 is allowed to pass through the duct 301 to be in direct thermal contact with the screw341 and thus in thermal contact with the conductive linking bar 31 via the screw 341 and the clamp 340.

In the embodiment, the shape of the conductive linking bar 31 is symmetrical about a transverse mid-plane which corresponds to that of the insulating body 30, when the terminal block 3 has the conductive linking bar 31 positioned in the insulating body 30. The conductive linking bar 31 is shaped like a plane being symmetrical about the above-defined transverse mid-plane and being designed to be placed parallel to the wall with the duct 301 formed through. Inside of the insulating body 30, it provides support elements for fixing the conductive linking bar 31 so that its two ends respectively abut the internal rims of the two holes 302 and at least a portion of it abuts the internal rim of the duct 301.

In the embodiment, the temperature probe 32 is configured to be at least partially received by the duct 301 of the insulating body 30 and be made of transparent and insulating material. The temperature probe 32 has a first end 320 and a second end 321 and a connecting portion 322 mechanically liking the first end 320 and the second end 321. For example, the longitudinal length from the first end 320 to the second end 321 of the temperature probe 32 is equal to or greater than the depth of the duct 301, and the transparent and insulating material can be selected from transparent thermoplastics (polycarbonate, polyamide, polymethylmethacrylate, ABS, rubbers, glasses and ceramics. In a state of assembly, the first end 320 and at least a part of the temperature probe 32 are arranged to pass through the duct towards the conductive linking bar 31 in a direction D so that the discoloration layer 33 on the first end 321 of the temperature probe 32 is closer to the conductive linking bar 31 than the second end 320 of the temperature probe 32. Preferably, the discoloration layer 33 at the first end 321 of the temperature probe 32 is arranged in contact with the conductive linking bar 31.

Thus, the discoloration layer at one end of the temperature probe is put in thermal contact via the screw connection terminal within the terminal block. The screw connection terminal is made of metal exhibiting a relatively low thermal resistance. Thus, the discoloration layer will be heated rapidly thereby in the event of the bar overheating to provide a rapid colour change indicating a fault condition. This makes it more sensitive to the temperature of the conductive linking bar. Besides, the lights reflecting the colour change of the discoloration layer will propagate to the external of the insulating body through the optical path provided by the transparent temperature probe and arrives at the second end portion of the probe, which makes it visible to the eyes of the observer from an external point of view. This allows the image of discoloration layer to be viewed by the observer perceiving a fault occurring.

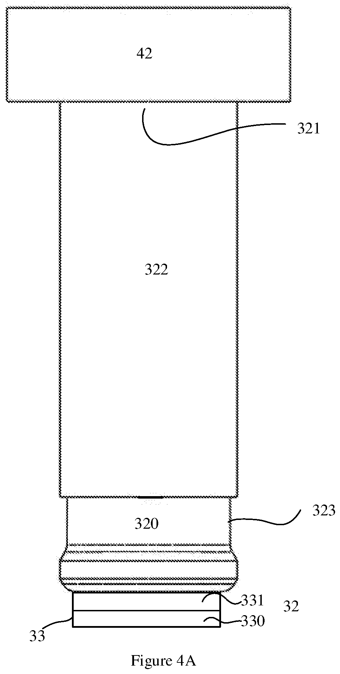

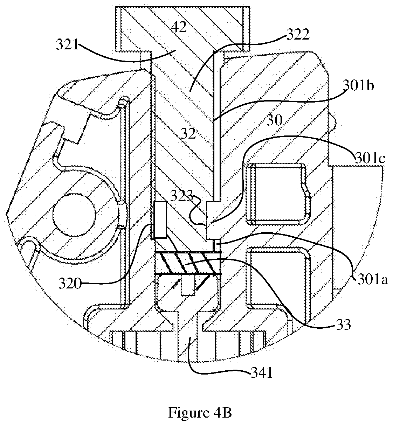

Figures 4A illustrates a side view of an embodiment of the temperature probe, and Figure 4B illustrates a sectional view along plane B-B of its assembly with the duct of the insulating body.

Figures 4A respectively illustrate an explosion view and a sectional view of the second embodiment of the temperature probe; and Figure 4B illustrates its assembly with the duct of the insulating body.

As shown figures 4A and 4B, the temperature probe 32 is shaped like a cylinder having the first end 320 and the second end 321. The shape of the temperature probe 32 may be adapted to fit for the internal space of the duct 301. The screw 341 of the screw connection terminal 34 has its rotation axis in the longitudinal direction of the duct 301. Preferably, along its longitudinal direction, the duct 301 includes a first portion 301a, a second portion 301b, and an inward protrusion 301c between its first portion 301a and the second portion 301b, and the first portion 301a is closer to the conductive linking bar 31 than the second portion 301b. When the screw 341 passes through the first portion 301a of the duct 301 in an opposite direction to the conductive linking bar 31, so that the screw 341 is not detachable from the terminal block 3, because the screw head will be obstructed by the inward protrusion 301c of the duct 301 to further pass into the second portion 301b of the duct 301, and the temperature probe 32 includes a recess portion 323 between its first end 320 and second end 321, being configured to mate with the inward protrusion 301c of the duct 301 preventing relative movement of the duct 301 and the temperature probe 32 in the longitudinal direction. For example, the inward protrusion 301c is designed to delimit a radius of the duct 301 smaller in size than that of the screw head for prevention of the detachment of the screw 341. The first portion 301a of the duct 301 has a radial section larger in size that that of the screw head, so that, it is within the space defined by the first portion 301a of the duct 301 that the screw 341 can be driven deeper or vice versa by the screw-driver. The temperature probe 32 has the recess portion 323 on its connecting portion 322 shaped in a circle coaxially with the longitudinal direction of the temperature probe 32. The recess portion 323 has a form that complements the inward protrusion 301c of the duct 301, so that the latter can be retained in the former where the temperature probe 32 is inserted in the duct 301.

Preferably, in a state of fastening the wire to the conductive linking bar 31, the discoloration layer 33 at the first end 320 of the temperature probe 32 is in direct contact with the head of the screw 341 of the screw connection terminal 34, and at the same time the inward protrusion 301c of the duct 301 mates with the recess portion 323 of the temperature probe 32. In such state, the head of the screw 341 and the first end 320 of the temperature probe 32 are disposed in space defined by the first portion 301a of the duct 301, and the second end 321 is placed in the space defined by the second portion 301b of the duct 301. These arrangements provide a way of use of the inward protrusion of the duct both for preventing the screw from being detached from the terminal block and obtaining an improved retaining effect for the temperature probe.

In the embodiment, the discoloration layer 33 is arranged in contact with the first end 320 of the temperature probe 32. For example, its thermochromic layer 330 can be sprayed/printed on the the first end 320 of the temperature probe 32. In order to accomplish the above objects, irreversible thermochromic materials, which change color at a defined temperature and remain unchanged when the temperature drops, are chosen to check the temperature history. In other embodiments, semi-reversible thermochromic materials, which change color at a defined temperature T1 and recover the original color when the temperature drops to T2 or when they meet water, may be also employed. As mentioned above, the designed threshold temperature for the example screw type terminal block is 110 or 130 °C. Of course, the threshold temperature could be set at other values depending on the specific applications or the customer's needs.

The discoloration layer 33 may use the same material in the first embodiment.

Preferably, the discoloration layer 33 further includes a background layer 331 showing background colors or graphics can be applied on thethermochromic (TC) materials of the discoloration layer 33 to provide a consistent basis for calibrating the color change. A base color or pattern is visible when the TC material changes to a clear, colorless or at least partially translucent state.

In the embodiment, the temperature probe 32 further includes a head 42 arranged at its second end 321 being shaped in a lens magnifying an image of the discoloration layer 33 at its first end 320. For example, the head is made of transparent and insulating material, such as thermoplastics (polycarbonate, polyamide, polymethylmethacrylate, ABS, et al), rubbers, glasses and ceramics, for an easy observation of the underlying color change. The color change of the discoloration layer will be visible with magnifying effect by an observer through the transparent head so as to raise his alert the fact that the terminal block is internally overheating. Given that the second end 321 of the temperature probe 32 has a relatively small exposed surface outside of the insulating body 30, a magnification lens or other special light transmission design will be adopted for an easier observation of the color change by human eyes from a long distance.

## Claims

1. A terminal block, including:
an insulating body (10, 30), having at least one duct (101, 301) and at least one hole (102, 302) formed through a wall of the insulating body (10, 30);
a conductive linking bar (11, 31) arranged in the insulating body (10, 30), being adapted for connecting at least one wire respectively passing through the at least one hole (102, 302); and
a temperature probe (12, 32) being configured to be received by the duct (101, 301) and made of transparent and insulating material, having a first end and a second end; and
a discoloration layer (13, 33) arranged at the first end of the temperature probe (12, 32), including at least a thermochromic layer (130, 330);
**characterised in that**
at least a portion of the temperature probe (12, 32) is arranged to pass through the duct (101, 301) towards the conductive linking bar (11, 31) so that the discoloration layer (13, 33) at the first end of the temperature probe (12, 32) is closer to the conductive linking bar (11, 31) than the second end of the temperature probe (12, 32).

2. The terminal block according to claim 1, further including:
a screw connection terminal arranged in the insulating body (10, 30), being configured to fasten one of the wires passing through one of the holes (102, 302) to the conductive linking bar (11, 31);
wherein:
the screw connection terminal includes a screw with rotational axis in a longitudinal direction of the duct (101, 301);
the duct (101, 301) includes a first portion, a second portion, and an inward protrusion between its first portion and the second portion, wherein the first portion is closer to the conductive linking bar (11, 31) than the second portion;
a head (22, 42) of the screw is arranged to pass through the first portion of the duct (101, 301) and is obstructed by the inward protrusion of the duct (101, 301) to further pass into the second portion of the duct (101, 301); and
the temperature probe (12, 32) includes a recess portion between its first end and second end, being configured to mate with the inward protrusion of the duct (101, 301) preventing relative movement of the duct (101, 301) and the temperature probe (12, 32).

3. The terminal block according to claim 2, wherein:
in a state of fastening the wire to the conductive linking bar (11, 31), the discoloration layer (13, 33) at the first end of the temperature probe (12, 32) is in contact with the head (22, 42) of the screw of the screw connection terminal with the mating of the inward protrusion of the duct (101, 301) and the recess portion of the temperature probe (12, 32).

4. The terminal block according to claim 1, wherein:
the discoloration layer (13, 33) at the first end of the temperature probe (12, 32) is arranged in contact with the conductive linking bar (11, 31).

5. The terminal block according to claim 4, wherein:
the conductive linking bar (11) includes an opening (110) facing the duct (101); and
the temperature probe (12) further includes a protrusion extending from its first end being arranged inserted into the opening (110) of the conductive linking bar (11) pressing against internal side of the opening (110).

6. The terminal block according to any of the preceding claims, wherein:
the duct (101, 301) is arranged to be substantially perpendicular to either of the one hole (102, 302).

7. The terminal block according any of the preceding claims 1 to 3, wherein:
the temperature probe (12, 32) further includes a head (22, 42) arranged at its second end being shaped in a lens magnifying an image of the thermochromic layer at its first end.

8. The terminal block according to claim 5, wherein:
the head (22, 42) of the temperature probe (12, 32) is arranged outside of the duct (101, 301) of the insulating body (10, 30).

9. The terminal block according to any of the preceding claims 1 to 3, wherein:
material of the thermochromic layer is selected from thermochromic paint, ink, tape, film, label or a combination

10. The terminal block according to any of the preceding claims 1 to 3, wherein:
the transparent and insulating material of the temperature probe (12, 32) is selected from transparent thermoplastics (polycarbonate, polyamide, polymethylmethacrylate, ABS, rubbers, glasses and ceramics.

11. The terminal block according to any of the preceding claims, where:
the discoloration layer (13, 33) further includes a background layer (131, 331) on the thermochromic layer (130, 330).

## Patentansprüche

1. Anschlussleiste, enthaltend:
einen Isolierkörper (10, 30), der über mindestens einen Kanal (101, 301) und mindestens ein Loch (102, 302) verfügt, das durch eine Wand des Isolierkörpers (10, 30) gebildet ist;
einen leitfähigen Verbindungsstab (11, 31), der im Isolierkörper (10, 30) angeordnet ist und zum Verbinden von mindestens einem Draht, der jeweils durch das mindestens eine Loch (102, 302) verläuft, angepasst ist; und
einen Temperaturfühler (12, 32), konfiguriert, um vom Kanal (101, 301) aufgenommen zu werden und aus transparentem und isolierendem Material gefertigt, der über ein erstes Ende und ein zweites Ende verfügt; und eine Verfärbungsschicht (13, 33), die am ersten Ende des Temperaturfühlers (12, 32) angeordnet ist, mindestens eine thermochrome Schicht (130, 330) enthaltend;
**dadurch gekennzeichnet, dass** mindestens ein Bereich des Temperaturfühlers (12, 32) so angeordnet ist, dass er durch den Kanal (101, 301) in Richtung des leitfähigen Verbindungsstabs (11, 31) verläuft, so dass die Verfärbungsschicht (13, 33) am ersten Ende des Temperaturfühlers (12, 32) näher am leitfähigen Verbindungsstab (11, 31) liegt als das zweite Ende des Temperaturfühlers (12, 32).

2. Anschlussleiste nach Anspruch 1, ferner enthaltend:
eine Schraubverbindungsleiste, die im Isolierkörper (10, 30) angeordnet ist, konfiguriert, um einen der durch eines der Löcher (102, 302) hindurchgehenden Drähte am leitfähigen Verbindungsstab (11, 31) zu befestigen;
wobei:
die Schraubverbindungsleiste eine Schraube mit Drehachse in Längsrichtung des Kanals (101, 301) enthält;
der Kanal (101, 301) einen ersten Bereich, einen zweiten Bereich und einen nach innen gerichteten Vorsprung zwischen seinem ersten Bereich und dem zweiten Bereich enthält, wobei der erste Bereich näher am leitfähigen Verbindungsstab (11, 31) liegt als der zweite Bereich;
ein Kopf (22, 42) der Schraube so angeordnet ist, dass er durch den ersten Bereich des Kanals (101, 301) verläuft und durch den nach innen gerichteten Vorsprung des Kanals (101, 301) daran gehindert wird, weiter in den zweiten Bereich des Kanals (101, 301) zu verlaufen; und
der Temperaturfühler (12, 32) zwischen seinem ersten Ende und zweiten Ende einen Vertiefungsbereich enthält, konfiguriert, um mit dem nach innen gerichteten Vorsprung des Kanals (101, 301) zusammenzupassen, um eine Relativbewegung des Kanals (101, 301) und des Temperaturfühlers (12, 32) zu verhindern.

3. Anschlussleiste nach Anspruch 2, wobei:
in einem Zustand der Befestigung des Drahtes am leitfähigen Verbindungsstab (11, 31) die Verfärbungsschicht (13, 33) am ersten Ende des Temperaturfühlers (12, 32) in Kontakt mit dem Kopf (22, 42) der Schraube der Schraubverbindungsleiste mit der Zusammenpassung des nach innen gerichteten Vorsprungs des Kanals (101, 301) und des Vertiefungsbereichs des Temperaturfühlers (12, 32) steht.

4. Anschlussleiste nach Anspruch 1, wobei:
die Verfärbungsschicht (13, 33) am ersten Ende des Temperaturfühlers (12, 32) in Kontakt mit dem leitfähigen Verbindungsstab (11, 31) angeordnet ist.

5. Anschlussleiste nach Anspruch 4, wobei:
der leitfähige Verbindungsstab (11) eine Öffnung (110) enthält, die dem Kanal (101) zugewandt ist; und
der Temperaturfühler (12) ferner einen Vorsprung enthält, der sich von seinem ersten Ende erstreckt und in die Öffnung (110) des leitfähigen Verbindungsstabs (11) eingeführt angeordnet ist, gegen die Innenseite der Öffnung (110) drückend.

6. Anschlussleiste nach einem der vorhergehenden Ansprüche, wobei:
der Kanal (101, 301) im Wesentlichen senkrecht zu jedem der einen Löcher (102, 302) angeordnet ist.

7. Anschlussleiste nach einem der vorhergehenden Ansprüche 1 bis 3, wobei:
der Temperaturfühler (12, 32) ferner einen an seinem zweiten Ende angeordneten Kopf (22, 42) enthält, der als eine Linse geformt ist, die an seinem ersten Ende ein Bild der thermochromen Schicht vergrößert.

8. Anschlussleiste nach Anspruch 5, wobei:
der Kopf (22, 42) des Temperaturfühlers (12, 32) außerhalb des Kanals (101, 301) des Isolierkörpers (10, 30) angeordnet ist.

9. Anschlussleiste nach einem der vorhergehenden Ansprüche 1 bis 3, wobei:
das Material der thermochromen Schicht ausgewählt ist aus thermochromer Farbe, Tinte, Klebeband, Folie, Etikett oder einer Kombination.

10. Anschlussleiste nach einem der vorhergehenden Ansprüche 1 bis 3, wobei:
das transparente und isolierende Material des Temperaturfühlers (12, 32) ausgewählt ist aus transparenten Thermoplasten (Polycarbonat, Polyamid, Polymethylmethacrylat), ABS, Kautschuken, Gläsern und Keramiken.

11. Anschlussleiste nach einem der vorhergehenden Ansprüche, wobei:
die Verfärbungsschicht (13, 33) ferner eine Hintergrundschicht (131, 331) auf der thermochromen Schicht (130, 330) enthält.

## Revendications

1. Bornier comprenant :
un corps isolant (10, 30), ayant au moins un conduit (101, 301) et au moins un trou (102, 302) formé à travers une paroi du corps isolant (10, 30) ;
une barre de liaison conductrice (11, 31) agencée dans le corps isolant (10, 30), étant adaptée pour connecter au moins un fil traversant respectivement l'au moins un trou (102, 302) ; et
une sonde de température (12, 32) étant configurée pour être reçue par le conduit (101, 301) et réalisée en un matériau transparent et isolant, ayant une première extrémité et une deuxième extrémité ; et
une couche de décoloration (13, 33) agencée au niveau de la première extrémité de la sonde de température (12, 32), comprenant au moins une couche thermochromique (130, 330) :
**caractérisé en ce que**
au moins une partie de la sonde de température (12, 32) est agencée pour traverser le conduit (101, 307) vers la barre de liaison conductrice (11, 31) de sorte que la couche de décoloration (13, 33) au niveau de la première extrémité de la sonde de température (12, 32) soit plus proche de la barre de liaison conductrice (11, 31) que la deuxième extrémité de la sonde de température (12, 32).

2. Bornier selon la revendication 1, comprenant en outre :
une borne de connexion à vis agencée dans le corps isolant (10, 30), étant configurée pour fixer un des fils passant par un des trous (102, 302) à la barre de liaison conductrice (11, 31) ;
dans lequel :
la borne de connexion à vis comprend une vis avec un axe de rotation dans une direction longitudinale du conduit (101, 301) ;
le conduit (101, 301) comprend une première partie, une deuxième partie et une saillie intérieure entre sa première partie et la deuxième partie, dans lequel la première partie est plus proche de la barre de liaison conductrice (11, 31) que la deuxième partie ;
une tête (22, 42) de la vis est agencée pour traverser la première partie du conduit (101, 301) et est empêchée par la saillie intérieure du conduit (101, 301) de passer davantage dans la deuxième partie du conduit (101, 301) ; et
la sonde de température (12, 32) comprend une partie en retrait entre sa première extrémité et sa deuxième extrémité, étant configurée pour s'accoupler avec la saillie intérieure du conduit (101, 301) empêchant le mouvement relatif du conduit (101, 301) et de la sonde de température (12, 32).

3. Bornier selon la revendication 2, dans lequel :
dans un état de fixation du fil à la barre de liaison conductrice (11, 31), la couche de décoloration (13, 33) au niveau de la première extrémité de la sonde de température (12, 32) est en contact avec la tête (22, 42) de la vis de la borne de connexion à vis avec l'accouplement de la saillie intérieure du conduit (101, 301) et la partie en retrait de la sonde de température (12, 32).

4. Bornier selon la revendication 1, dans lequel :
la couche de décoloration (13, 33) au niveau de la première extrémité de la sonde de température (12, 32) est agencée en contact avec la barre de liaison conductrice (11, 31).

5. Bornier selon la revendication 4, dans lequel :
la barre de liaison conductrice (11) comprend une ouverture (110) faisant face au conduit (101) ; et
la sonde de température (12) comprend en outre une saillie s'étendant depuis sa première extrémité qui est agencée pour être insérée dans l'ouverture (110) de la barre de liaison conductrice (11) en appuyant contre le côté interne de l'ouverture (110).

6. Bornier selon l'une quelconque des revendications précédentes, dans lequel :
le conduit (101, 301) est agencé de manière à être sensiblement perpendiculaire à l'un ou l'autre des trous (102, 302).

7. Bornier selon l'une quelconque des revendications précédentes 1 à 3, dans lequel :
la sonde de température (12, 32) comprend en outre une tête (22, 42) agencée au niveau de sa deuxième extrémité, étant en forme de lentille grossissant une image de la couche thermochromique au niveau de sa première extrémité.

8. Bornier selon la revendication 5, dans lequel :
la tête (22, 42) de la sonde de température (12, 32) est agencée à l'extérieur du conduit (101, 301) du corps isolant (10, 30).

9. Bornier selon l'une quelconque des revendications précédentes 1 à 3, dans lequel :
le matériau de la couche thermochromique est choisi parmi une peinture thermochromique, une encre, un ruban, un film, une étiquette ou une combinaison de ceux-ci.

10. Bornier selon l'une quelconque des revendications précédentes 1 à 3, dans lequel :
le matériau transparent et isolant de la sonde de température (12, 32) est choisi parmi des thermoplastiques transparents (polycarbonate, polyamide, polyméthacrylate de méthyle, ABS), des caoutchoucs, des verres et des céramiques.

11. Bornier selon l'une quelconque des revendications précédentes, dans lequel :
la couche de décoloration (13, 33) comprend en outre une couche de fond (131, 331) sur la couche thermochromique (130, 330).
